(19) Europäisches Patentamt

European Patent Office

Office européen des brevets

(11) **EP 1 348 075 B1**

(12) **EUROPEAN PATENT SPECIFICATION**

(45) Date of publication and mention
of the grant of the patent:
**28.06.2006 Bulletin 2006/26**

(51) Int Cl.:
***F03D 3/06*** (2006.01)

(21) Application number: **01983858.0**

(22) Date of filing: **14.11.2001**

(86) International application number:
**PCT/LV2001/000008**

(87) International publication number:
**WO 2002/053908 (11.07.2002 Gazette 2002/28)**

(54) **VERTICAL AXIS WIND TURBINE**

WINDTURBINE MIT SENKRECHTER ACHSE

EOLIENNE A AXE VERTICAL

(84) Designated Contracting States:
**AT BE CH CY DE DK ES FI FR GB GR IE IT LI LU
MC NL PT SE TR**
Designated Extension States:
**LT RO SI**

(30) Priority: **05.01.2001 LV 010002**

(43) Date of publication of application:
**01.10.2003 Bulletin 2003/40**

(73) Proprietor: **Latekols, Sia
1056 Riga (LV)**

(72) Inventors:
• **NIKITINS, Leonids
LV-1082 Riga (LV)**

• **STECURINS, Mihails
LV-1082 Riga (LV)**
• **SCERBINA, Aleksandrs
LV-1082 Riga (LV)**

(74) Representative: **Hakola, Unto Tapani
Tampereen Patenttitoimisto Oy,
Hermiankatu 12B
33720 Tampere (FI)**

(56) References cited:
**EP-A- 0 679 805          WO-A-80/00733
WO-A-96/01368          AT-B- 392 125
DE-A- 3 130 507**

• **PATENT ABSTRACTS OF JAPAN vol. 007, no. 145
(M-224), 24 June 1983 (1983-06-24) & JP 58 057082
A (SHIGEFUMI MORI), 5 April 1983 (1983-04-05)**

**Description**

This invention relates to wind power engineering, namely to *vertical axis* wind *turbines* which may be used in wind electrical generators or equipments for conversion of wind energy into electrical energy.

Rotor of prior art for wind *turbine* is known from Russian Federation patent application No. 2135824, IPC[6] F03D7/06, filing date 09.10.1996, publication date 27.08.1999. Known rotor of wind *turbine* comprises two S-shaped blades mounted on vertical shaft. S-shaped blades are fastened on rotatable paralel cross-arms which are rigidly connected with vertical shaft. Moreover the fastening points of blades are aligned with the axis of symmetry of the blade behind of its centre of gravity in direction away from the vertex of the S-shaped blade.

A disadvantage of the above described known rotary wind *turbine* resides in the complexity of rotary design, low power range and relatively low efficiency.

Another rotary wind *turbine* with vertically positioned shaft is known, e.g., from Russian Federation patent application No. 2096259, IPC[6] B63H13/00, filing date 15.11.1993, publication date 20.11.1997 (prototype), which is provided with lower and upper disc type washers and mechanism for rotating of blades. Axis of washers is aligned with vertical axis of rotation. On lower end faces of blades there are fastened position locators with possibility to engage them with holes made in said washers. The said mechanism for rotating of blades comprises an element, which is fixed to the rotor shaft, situated on lower washer. A vertical rotor comprising two blades on each arm is known from the document EP-A-679805.

A disadvantage of the said known wind *turbine* resides in insufficient reliability, insuficient power range and insufficiently high efficiency.

An object of the present invention is to increase efficiency and power owing to provision of high rotation speed of rotor and to improve starting acceleration of the rotor.

According to the present invention there is provided a *vertical axis wind turbine* which comprises rotor provided with a plurality of arms mounted at equal angles round the vertical axis and a plurality of blades connected to the blocks and in cascade, characterized by that the number of the blade blocks is selected from the following number range: two, three; the blade blocks are provided with four cascaded blades, the said cascaded blades in the blocks are displaced in respect to the symmetry line of each block in the direction of rotation of rotor.

It is advisable to provide the wind turbine with two blade blocks and four cascaded blades in each block so that the said cascaded blades in the blocks are displaced in clockwise direction in respect to the symmetry line of the said two blocks; or in other embodiment thereof it is advisable to provide the wind turbine with three blade blocks and four cascaded blades in each block so that the said cascaded blades in the blocks are displaced in clockwise direction in respect to the symmetry line of the each block.

The invention may be better understood from the following detailed description of an embodiment thereof due reference being made to the accompanying drawings, in which:

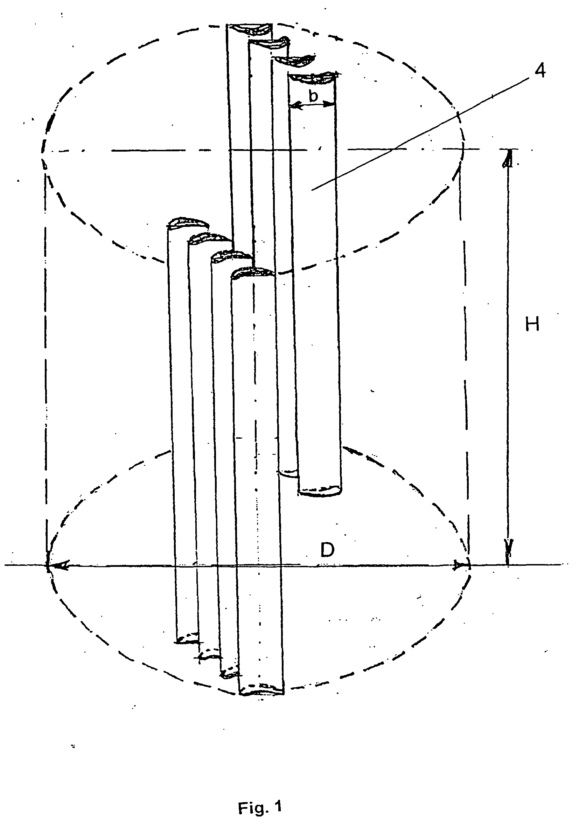

Figure 1 shows schematic view cascaded configuration of blades;
Figure 2 is a top view of wind motor rotor; and
Figure 3 is a blade profile.

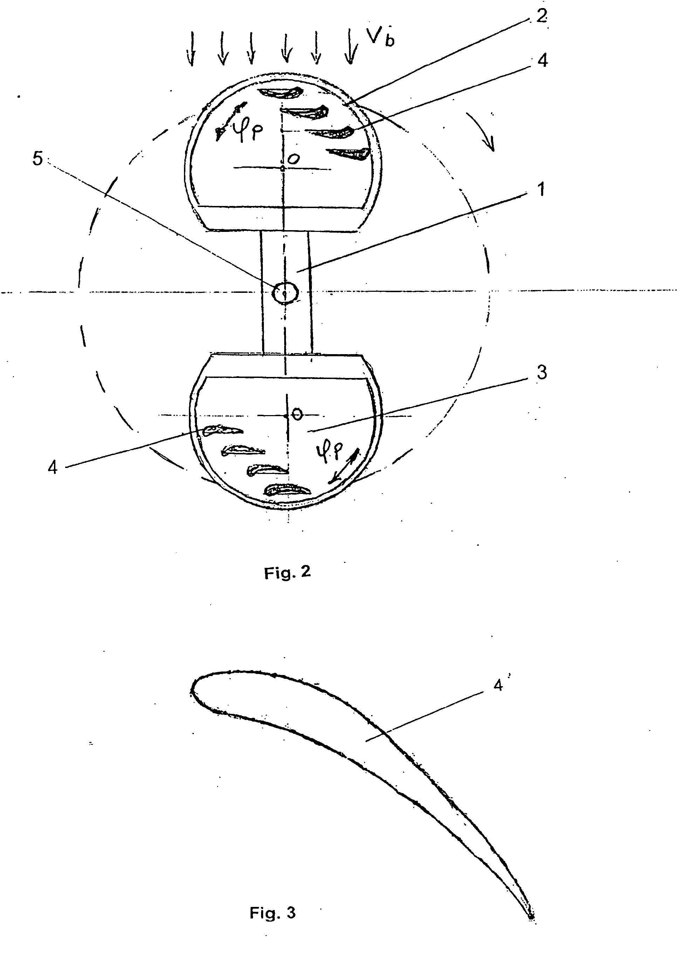

*Vertical axis wind turbine* comprises rotor 1 provided with two *symmetrical arms* with blocks 2 and 3 of aerodynamic cascades whereinto each block advantageously consists of four blades 4 realized in the form of a turbine-type configuration of blades. *Arms with* blocks 2 and 3 of aerodynamic cascade are mounted on central vertical shaft 5 *at equal angles around thereof, namely at 180° one from another.* Blade profiles are in the form of subsonic aerodynamic profiles (Figure 3). *Figure 2 shows that the cascaded blades 4 in the block 2 and accordingly the cascaded blades 4 in the block 3 are displaced in respect to the symmetry line O-O of the said blocks 2 and 3 in the direction of rotation (shown by arrow) of the said rotor 1. The rotor I of described embodiment of wind turbine is shown rotating in clockwise direction.* Efficiency of the suggested design of rotary cascaded wind turbine is determined by selection of the lead ($\gamma$) of blade, mounting angle ($\varphi_p$) of cascaded block, cascaded blade deflection ($\chi$), value of the shading factor ($K_3$) and value of the chord of blade profile *(b).* It is established that values of the said parameters may be in the range of:

- lead ($\gamma$) of blade: 0.4 *to* 0.6 *b;*
- mounting angle ($\varphi_p$) of cascaded block: 0 *to* 5°*;*
- cascaded blade deflection ($\chi$): 0.4 *to* 0.6 *b*;
- value of the shading factor ($K_3$): 0.3 *to* 0.5;

in which:

*b* - value of the chord of blade profile.

However it is established in the process of testing of models equipped with subsonic aerodynamic blade profiles that the optimum values of the said parameters are as follow:

- $\gamma = 0.5\ b;$
- $\varphi_p = 0°;$
- $\chi = 0.5\ b;$
- $K_3 \leq 0.5;$

Value of the chord (b) of blade profile is determined in dependance of number (Z) of blade profiles, selected values of shading factor ($K_3$) and diameter (D) of the rotor of wind *turbine*. It is established that that the optimum numer of cascaded blocks equals to two, but optimum range of number (Z) of blade profiles in each block does not exceed four. However the number of cascaded aerodynamic blocks of wind *turbine* may be determined on conditions that the value of the shading factor $K_3 \leq 0.5$. According to the requirements of strength and power efficiency the most expedient number of blocks equals to two or three.

Rotary cascaded wind *turbine* may be used in the most efficient way as a large power *wind turbine* having dimensions: diameter $D \geq (6 \div 10)$ m; height $H = (1.0 \div 1.5)$ D.

Single-unit power (Ñ) of one row of aerodynamic blade profiles at optimum mode of operation may be determined by experimental dependence:

$$\bar{N} = N/S = a \times \rho \times U_n^3/10^3 \ (\text{kw/m}^2),$$

in which:

N - total power of one row of two blocks,
S - total area of blades arranged in one row of two blocks;
$U_n$ - peripheral velocity of blades arranged in one row of two blocks (m/sec);
$\rho$ - air density (kg/m$^3$);
a - efficiency factor of aerodynamic characteristics of cascaded blade profiles; this factor is determined during testing of full-scale wind *turbines* being equipped with specific blade profiles.

Rotor of wind *turbine* is rotating under action of wind actuating electrical generator or other equipment (not shown), ensuring conversion of wind energy into electrical or mechanical energy.

The wind *turbine* equipped with cascaded block in turbine-type configuration of aerodynamic blade profiles according to the results of testing of models allows:

- significantly to increase efficiency of wind *turbine* due to the more effective making use of aerodynamic characteristics of blade profiles in turbine-type configuration; practically the efficiency is more than 0.8 ($\xi_{max} \geq 0.8$ );
- to increase power of wind *turbine* due to keeping up specific speed of rotor because of widening of the variable range of value of the shading factor ($K_3$) up to $K_3 \leq 0.5$ instead of $K_3 \leq 0.3$ since it was in connection with rotary wind *turbines* of prior art;
- to improve starting acceleration of the wind *turbine* due to making use of turbine-type configuration of cascades.

Further improvement of power parameters of wind *turbine* may be achieved by improving aerodynamic properties of subsonic blade profiles used in turbine-type cascades of wind motors by means of using of mechanization devices for blades, e.g., by means of using of leading-edge flap, trailing-edge flap, discharging facilities of boundary layer etc.

The *wind turbine* in accordance with the present invention is industrially applicable due to the fact that the said wind *turbine* may be manufactured and widely used in production of *vertical axis wind turbines* for converting wind energy into electrical or mechanical energy.

## Claims

1. A vertical axis wind turbine which comprises rotor (1) provided with a plurality of arms mounted at equal angles round the vertical axis and a plurality of blades (4) connected to a block (2,3) and in cascade, wherein the number of the blade blocks is selected from the following number range: two, three; **characterized in that** the blade blocks (2,3) are provided with four cascaded blades (4), the said cascaded blades in the blocks are displaced in respect to the symmetry line of each block in the direction of rotation of rotor.

2. A vertical axis wind turbine according to Claim 1 **characterized in that** the said turbine comprises two blade blocks (2,3) with four cascaded blades (4) in each block, the said cascaded blades in the blocks (2,3) are displaced in clockwise direction in respect to the symmetry line of the said two blocks.

3. A vertical axis wind turbine according to Claim 1 **characterized in that** the said turbine comprises three blade blocks (2,3) with four cascaded blades (4) in each block, the said cascaded blades in the each of the said blocks (2,3) are displaced in clockwise direction in respect to the symmetry line of each block.

**Patentansprüche**

1. Windturbine mit senkrechter Achse umfassend einen Rotor (1) mit einer Vielzahl von Armen, die in gleichen Winkeln um die senkrechte Achse angebracht sind, und eine Vielzahl von Blättern (4), die mit einem Block (2, 3) verbunden und kaskadiert sind, wobei die Anzahl der Blattblöcke aus dem folgenden Zahlbereich ausgewählt ist: zwei, drei, **dadurch gekennzeichnet, dass** die Blattblöcke (2, 3) mit vier kaskadierten Blättern (4) versehen sind, wobei die kaskadierten Blätter in den Blöcken in Bezug auf die Symmetrielinie jedes Blocks in der Drehrichtung des Rotors verschoben sind.

2. Windturbine mit senkrechter Achse nach Anspruch 1, **dadurch gekennzeichnet, dass** die Turbine zwei Blattblöcke (2, 3) mit vier kaskadierten Blättern (4) in jedem Block aufweist, wobei die kaskadierten Blätter in den Blöcken (2, 3) im Uhrzeigersinn in Bezug auf die Symmetrielinie der zwei Blöcke verschoben sind.

3. Windturbine mit senkrechter Achse nach Anspruch 1, **dadurch gekennzeichnet, dass** die Turbine drei Blattblöcke (2, 3) mit vier kaskadierten Blättern (4) in jedem Block aufweist, wobei die kaskadierten Blätter in jedem der Blöcke (2, 3) im Uhrzeigersinn in Bezug auf die Symmetrielinie jedes Blocks verschoben sind.

**Revendications**

1. Eolienne à axe vertical comprenant un rotor (1) muni d'une pluralité de bras montés à des angles égaux autour de l'axe vertical et une pluralité de pales (4) reliées à une unité (2, 3) et en cascade, le nombre des unités à pales étant choisi dans l'intervalle de nombres suivant: deux, trois, **caractérisée en ce que** les unités à pales (2, 3) sont munies de quatre pales (4) en cascade, lesdites pales en cascade dans les unités étant décalées par rapport à la ligne de symétrie de chaque unité dans le sens de rotation du rotor.

2. Eolienne à axe vertical selon la revendication 1, **caractérisée en ce que** ladite éolienne comprend deux unités à pales (2, 3) avec quatre pales (4) en cascade dans chaque unité, lesdites pales en cascade dans les unités (2, 3) étant décalées dans le sens des aiguilles d'une montre par rapport à la ligne de symétrie desdites deux unités.

3. Eolienne à axe vertical selon la revendication 1, **caractérisée en ce que** ladite éolienne comprend trois unités à pales (2, 3) avec quatre pales (4) en cascade dans chaque unité, lesdites pales en cascade dans chacune desdites unités (2, 3) étant décalées dans le sens des aiguilles d'une montre par rapport à la ligne de symétrie de chaque unité.

Fig. 1

Fig. 2

Fig. 3